## Europäisches Patentamt
## European Patent Office
## Office européen des brevets

(19)

(11) Veröffentlichungsnummer: **0 212 256**
B1

(12)

# EUROPÄISCHE PATENTSCHRIFT

(45) Veröffentlichungstag der Patentschrift:
03.01.90

(51) Int. Cl.⁴: **G01F 11/24, B65G 53/46**

(21) Anmeldenummer: 86109753.3

(22) Anmeldetag: 16.07.86

(54) **Vorrichtung zum dosierten Auftragen von Schüttgut.**

(30) Priorität: 16.08.85 DE 3529480
13.12.85 DE 3544014

(43) Veröffentlichungstag der Anmeldung:
04.03.87 Patentblatt 87/10

(45) Bekanntmachung des Hinweises auf die Patenterteilung:
03.01.90 Patentblatt 90/1

(84) Benannte Vertragsstaaten:
BE DE FR GB IT NL

(56) Entgegenhaltungen:
DE-A- 3 025 049
DE-A- 3 425 895

(73) Patentinhaber: AVT Anlagen- und Verfahrenstechnik GmbH, Aichenwiesen 18, D-7981 Vogt(DE)

(72) Erfinder: Krambrock, Wolfgang, Dipl.-Ing., Aichenwiesen 18, D-7981 Vogt(DE)

(74) Vertreter: Patentanwälte Dipl.-Ing. E. Eisele Dr.-Ing. H. Otten, Seestrasse 42, D-7980 Ravensburg(DE)

## Beschreibung

Die Erfindung betrifft eine Vorrichtung zum Dosieren von Schüttgut nach dem Oberbegriff des Anspruchs 1.

Schüttgüter können mit Hilfe allgemein bekannter Zellenradschleusen aus einem Raum beliebig hohen Druckes in einem Raum gleich hohen, höheren oder niedrigeren Druckes dosiert ausgetragen werden. Dabei werden die zwischen den radialen Schaufeln eines um eine horizontale Achse in einem zylindrischen Gehäuse drehenden Rotors gebildeten Taschen an der Oberseite mit Schüttgut gefüllt und nach einer Drehung um ca. 180° an der Unterseite entleert.

Bei einer bekannten Zellenradschleuse (DE-A1 3 425 895) der gattungsgemäßen Art wird mit einem um eine senkrechte Achse drehbaren Zellenrad das Schüttgut den Zellenkammern über eine segmentförmige Öffnung zugeführt, um nach einer Rotordrehung von ca. 180° in die exzentrisch am Gehäuseboden befindliche Austragsöffnung entleert zu werden.

Der Vorteil einer solchen Zellenradschleuse mit vertikaler Achse ist darin zu sehen, daß sie einen großen Einlaufquerschnitt aufweisen und daher auch für schwerfließende, brückenbildende Schüttgüter geeignet sind. Weiterhin wirkt die Zentrifugalkraft im Gegensatz zu den Zellenradschleusen mit horizontaler Achse dem einlaufenden Schüttgutstrom nicht entgegen.

Nachteilig an der bekannten Zellenradschleuse ist, daß es insbesondere beim Dosieren grobkörniger Schüttgüter, wie zum Beispiel Kunststoffgranulat, zu einem Einklemmen und unerwünschten Abscheren von Partikeln zwischen den Rotorschaufeln und der der Schaufelbewegung entgegengerichteten Kante der exzentrischen Einlauföffnung kommt. Weiterhin tritt durch das Abscheren und Abquetschen von Partikeln ein nicht unerheblicher Verschleiß an den Kanten der Zellenradschaufeln auf.

Ein weiterer Nachteil anderer bekannter Zellenradschleusen mit vertikaler Achse und vertikal nach unten gerichteter Austrittsöffnung für den Produktaustrag besteht darin, daß die Zentrifugalkraft den Produktaustrag derart behindert, daß ein Teil des an die zylindrische Gehäusewand geschleuderten Feststoffes gar nicht mehr aus den Taschen entleert werden kann.

Bei der eingangs erwähnten bekannten Zellenradschleuse wird deshalb die Austrittsöffnung radial aus dem Gehäuse herausgeführt, was jedoch den Nachteil hat, daß sich die Einrichtung nur in Verbindung mit einer pneumatischen Fördereinrichtung einsetzen läßt. Oft ist es aber zweckmäßig, mehrere Dosiergeräte mit einer gemeinsamen Förderleitung zu verbinden, was mit dem erwähnten Gerät praktisch jedoch unmöglich ist, da der pneumatisch geförderte Feststoff durch die Rotoren der nachfolgenden Geräte transportiert werden muß, wodurch ein äußerst hoher Druckverlust entsteht und es leicht zu einer Verstopfung der durch die Zellenradschleusen geführten Rohrleitungsabschnitte kommt.

Aus der Druckschrift DE-A1 2 025 049 ist weiterhin eine Meßeinrichtung für Granulatmaterialien bekannt geworden, mit in einem Gehäuse angeordneten Einzelkammern, die durch sternförmige Einzelwände gebildet sind. Der Füllvorgang der einzelnen Kammern geschieht durch eine Rotation der oberen Abdeckplatte, die einen kreissegmentförmigen Ausschnitt aufweist. Der kreissegmentförmige Ausschnitt kann dabei durch eine zusätzliche, ebenfalls kreissegmentförmige Abdeckplatte in seiner Durchlaßöffnung variiert werden, so daß die Einströmmenge in die einzelnen Kammern beeinflußt werden kann. Die Einfüllmenge in die stationären Kammern wird demnach durch die Umlaufgeschwindigkeit der oberen Abdeckplatte und die Größe der Eintrittsöffnung bestimmt, d.h. diese Meßeinrichtung dosiert in Abhängigkeit vom Auffüllgrad der stationär angeordneten Kammern.

Um bei dieser bekannten Vorrichtung gemäß der Druckschrift DE-A1 3 025 049 eine glatte und ungestörte Drehung der oberen Endplatte zu ermöglichen, ragt die verschiebbare zusätzliche Abdeckplatte stets um ein restliches Vorsprungsmaß in die Durchlaßöffnung der oberen Abdeckplatte hinein. Hierdurch kann kein Granulat zwischen dem unteren Teil der hinteren Kante der Durchtrittsöffnung und der Oberkante der Wandungsabschnitte geraten.

Der Erfindung liegt die Aufgabe zugrunde, eine Zellenradschleuse mit vertikaler Achse zu schaffen, mit deren Hilfe auch grobkörnige Schüttgüter weitgehend ohne Abscheren und Abquetschen der einzelnen Partikel dosiert werden können, bei der die vollständige Entleerung der einzelnen Schleusenkammern mit Unterstützung der Fliehkraft sowohl in einem offenen oder geschlossenen Raum als auch in einer pneumatischen Förderleitung möglich ist. Weiterhin sollen mehrere Zellenradschleusen an eine gemeinsame pneumatische Förderleitung anschließbar sein.

Diese Aufgabe wird ausgehend von einer Vorrichtung nach dem Oberbegriff des Anspruchs 1 erfindungsgemäß durch die kennzeichnenden Merkmale des Anspruchs 1 gelöst.

Durch die erfindungsgemäße Ausbildung der Vorrichtung lassen sich die in der Beschreibungseinleitung geschilderten Nachteile der bekannten Vorrichtung vermeiden. Insbesondere werden auch grobkörnige Schüttgüter weitgehend ohne Abscheren oder Abquetschen der einzelnen Partikel dosiert weiter gegeben. Weiterhin ermöglicht die Erfindung auch bei Zellenradschleusen mit vertikaler Achse eine vollständige Entleerung der einzelnen Schleusenkammern mit Unterstützung der Fliehkraft, wobei die Förderung sowohl in einem offenen als auch in einem geschlossenen Raum bzw. in einer pneumatischen Förderleitung erfolgen kann.

Weitere erfindungswesentliche Merkmale und Vorteile ergeben sich aus den Unteransprüchen sowie dem nachfolgend anhand der Zeichnung näher erläuterten Ausführungsbeispielen. Es zeigen:

Fig. 1 einen Längsschnitt durch die erfindungsgemäße Vorrichtung,

Fig. 2 einen Querschnitt entlang der Schnittlinie I-I in Fig. 1,

Fig. 3 einen Querschnitt entlang der Schnittlinie II-II in Fig. 1,

Fig. 4 einen Querschnitt entlang der Schnittlinie III-III in Fig. 1,

Fig. 5 einen Längsschnitt entlang der Linie IV-IV in Fig. 2,

Fig. 6 einen Ausschnitt der Vorrichtung in perspektivischer Darstellung,

Fig. 7 bis 9 Anschlußmöglichkeiten der Vorrichtung an eine pneumatische Förderleitung,

Fig. 10 mehrere an eine gemeinsame pneumatische Förderanlage angeschlossene Dosiervorrichtungen und

Fig. 11 eine Verschließeinrichtung des Zellenradgehäuses.

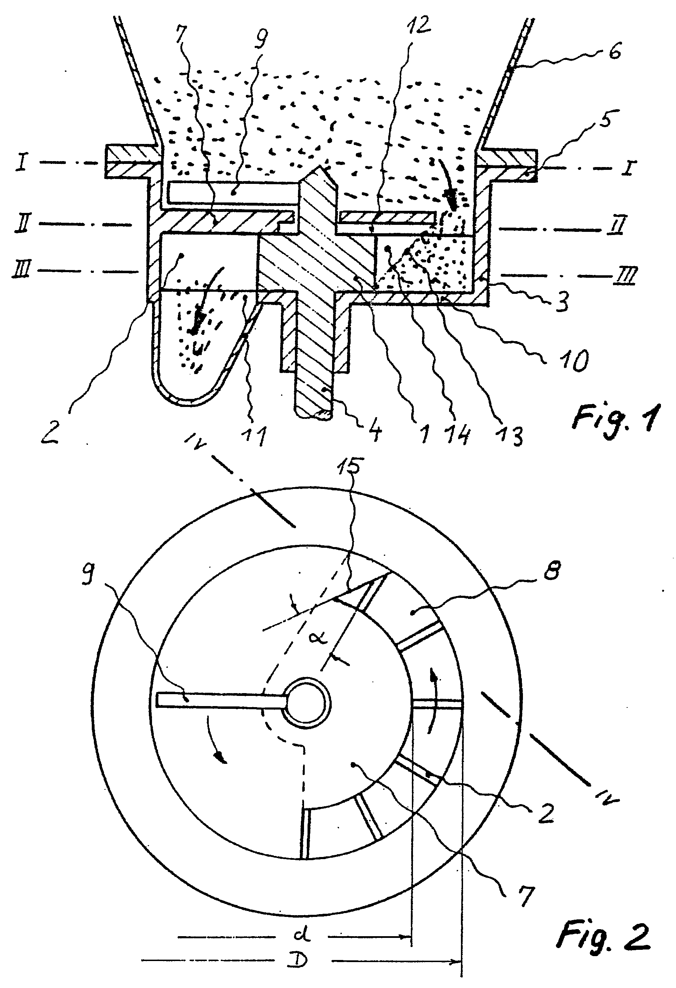

Die in den Figuren 1 bis 4 dargestellte Vorrichtung besteht aus einem Zellenrad mit einer Nabe 1 und radialen Schaufeln 2, das in einem zylindrischen Gehäuse 3 drehfest auf einer Antriebswelle 4 befestigt ist. Das Gehäuse 3 ist beispielsweise über einen Flansch 5 mit dem Auflauf eines Lagerbehälters 6 für Schüttgut verbunden. Oberhalb des Rotors befindet sich die Abdeckplatte 7 mit einer ringsegmentförmigen Öffnung 9. Der mit dem Rotor umlaufende Räumarm 9 verhindert, daß sich Schüttgut auf der geschlossenen Seite der Abdeckplatte 7 ablagert. Am Boden 10 des Gehäuses 3 befindet sich eine Austragsöffnung 11, durch das in den Taschen des Zellenrades befindliche Schüttgut entleert wird. Die Abdeckplatte 7 besitzt eine Aussparung 12, wodurch im Bereich der segmentförmigen Eintrittsöffnung 8 ein Spalt zwischen den Oberkanten der Rotorschaufel 2 und der Unterseite der Abdeckplatte 7 entsteht. Der innere Radius (d 1/2) der segmentförmigen Eintrittsöffnung 8 ist größer als der Durchmesser der Rohrnabe 1.

Hierdurch kann das zu dosierende Schüttgut die von den Schaufeln 2 und der Nabe 1 begrenzten Taschen nicht vollständig füllen, da sich eine natürliche Schüttgutböschung 13 einstellt. Der somit entstehende Hohlraum 14 bleibt während der Drehung des Rotors erhalten, da außer der Schwerkraft nur noch die radiale, nach außen gerichtete Fliehkraft auf das in den Taschen befindliche Schüttgut wirkt. Dadurch kann an der Kante 15 der Eintrittsöffnung bereits überschüssiges, in den Taschen befindliches Schüttgut in Richtung des Hohlraumes 14 abgestreift werden.

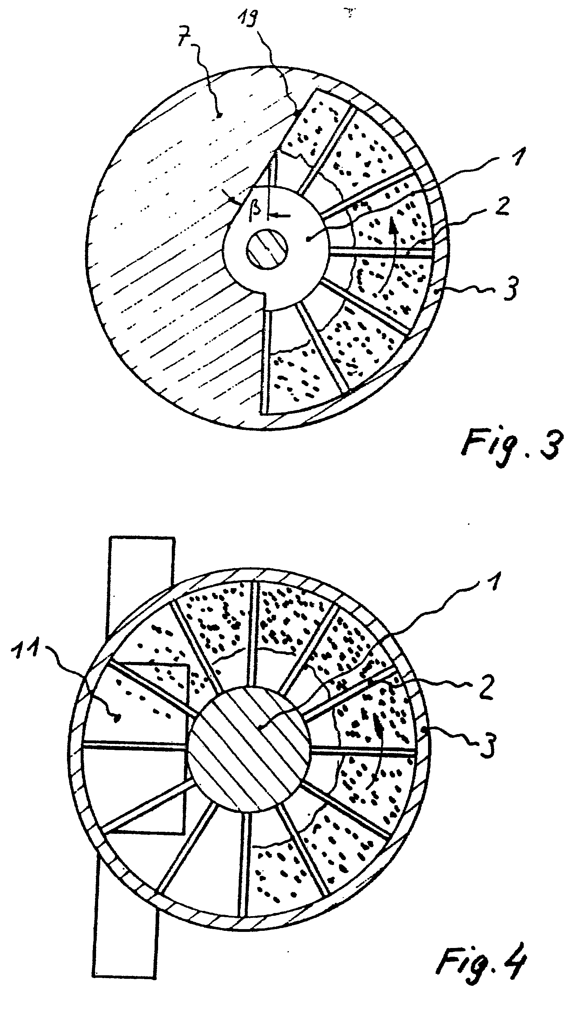

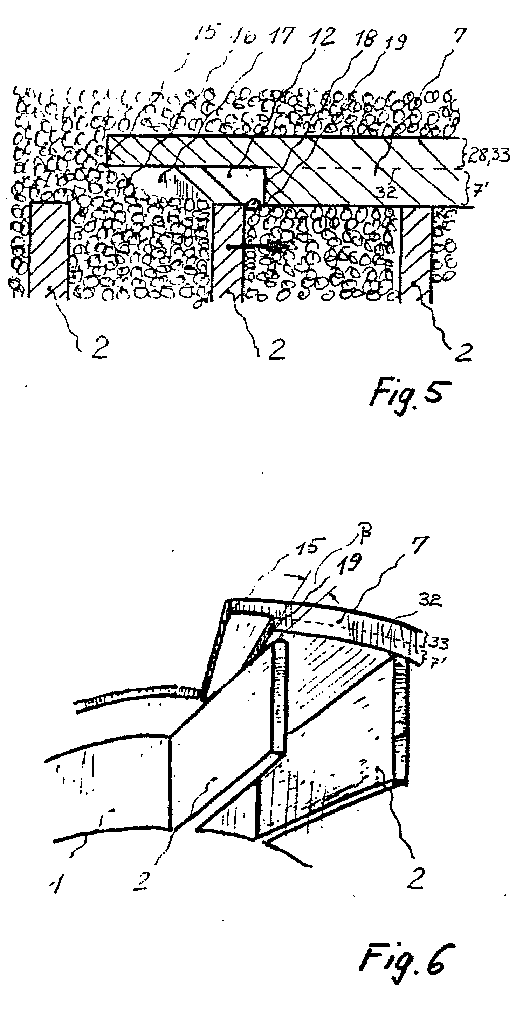

Die in Fig. 5 dargestellte Aussparung 12 in der Abdeckplatte 7 bewirkt, daß sich darunter ebenfalls eine Schüttgutböschung 16 mit darunter befindlichem Hohlraum 17 ausbildet. Einzelne Partikel 18, die zwischen den Schaufeln 2 und der Kante 19 eingeklemmt werden, können - wie auch aus Fig. 1 und 3 ersichtlich - beim Drehen des Rotors in den Hohlraum 14 abgestreift werden, ohne daß es zu einem Abscheren der Teilchen kommt. Diesen Vorgang zeigt Bild 6 in einer perspektivischen Darstellung der Abstreifkante 15 und 19 aus der Sicht von unten gegen die Abdeckplatte 7.

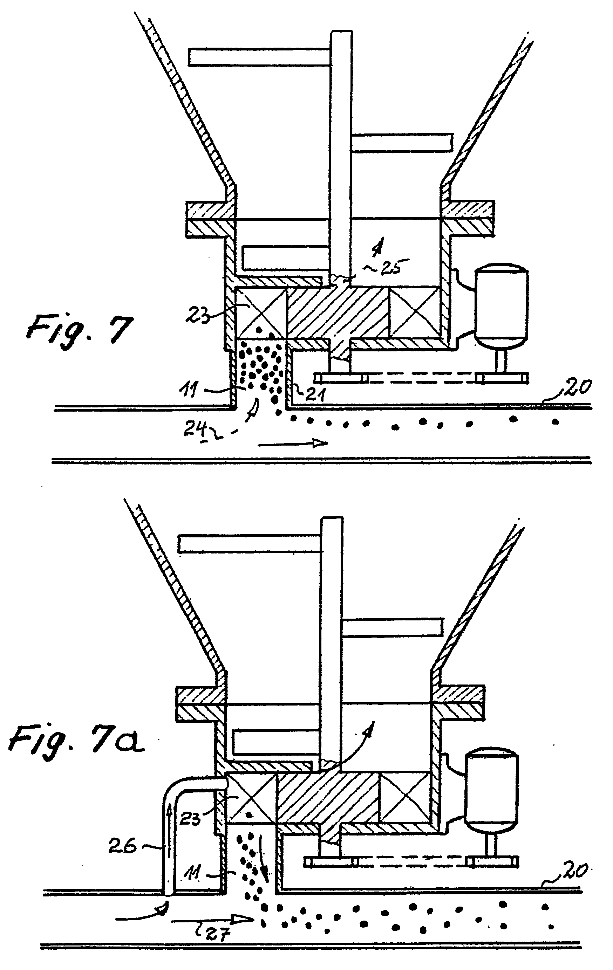

Fig. 7 zeigt, wie die Auslauföffnung 11 der Dosiervorrichtung zweckmäßigerweise mit einer pneumatischen Förderleitung 20 verbunden wird. Da bei geringen Drehzahlen des Rotors 2 der Produktaustrag praktisch ausschließlich durch die Schwerkraft erfolgt, ist es ausreichend, den Produktaustrag entsprechend der Ausbildung der Vorrichtung nach Fig. 1 bzw. 7 auszubilden, d. h. senkrecht nach unten.

Die Ausbildung der Erfindung nach Fig. 7 hat den Nachteil, daß bei Überdruck in der pneumatischen Förderleitung 20 ein Druckgefälle zwischen dieser Leitung und der Zellenradkammer 23 besteht. Dies führt dazu, daß ein Teil der Förderluft entsprechend dem Pfeil 24 in die Dosiervorrichtung eindringt und das Ausströmen des Schüttgutes erschwert. Der Pfeil 25 deutet den weiteren Weg der "Falschluft" in den Siloraum an. Die Druckunterschiede zwischen der pneumatischen Förderleitung 20 und der Zellenradkammer 23 können durchaus zwischen 05, bis 1 bar liegen, je nach Länge der Förderleitung 20 und Leistung der pneumatischen Förderung.

Um diesen Mißstand zu beheben, ist erfindungsgemäß eine Druckausgleichsleitung 26 vorgesehen, die in Strömungsrichtung gesehen, vor der Austragsöffnung 11 liegt und die Förderleitung 20 mit der Zellenradkammer 23 verbindet. In diesem Fall herrscht an dieser Stelle sowohl in der Zellenradkammer 23 als auch in der Förderleitung 20 der gleiche Druck, so daß das Schüttgut durch die Schwerkraft ungehindert ausgetragen werden kann (s. Fig. 7a).

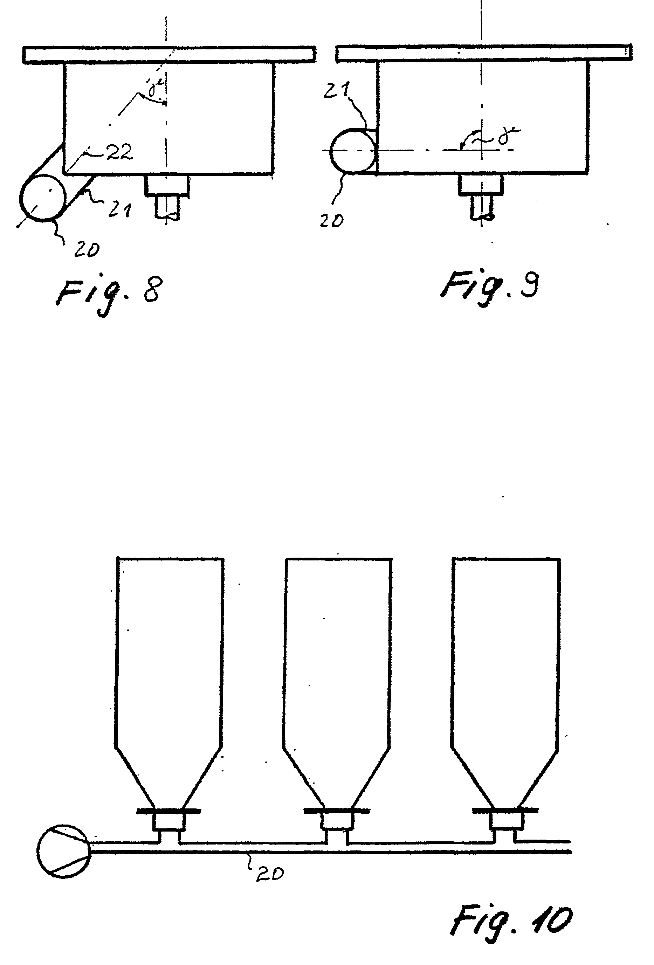

Überwiegt beim Produktaustrag durch hohe Zellenraddrehzahl die Zentrifugalkraft, so ist es zweckmäßig, die Auslaßöffnung 11 entsprechend den Darstellungen in den Figuren 8 bzw. 9 auszubilden, d. h. mit schräg oder horizontal angeordneter Austrittsöffnung 11 mit Anschlußstutzen 21 zur Förderleitung 20. Die Flächennormale der Austrittsöffnung 11 kann mit der Mittelsenkrechten einen Winkel $\gamma$ zwischen 0° und 90° einschließen.

Zwischen den Vorrichtungen nach den Figuren 1 bzw. 7 und denjenigen nach Fig. 9 sind Ausführungsbeispiele möglich, die je nach Rotordrehzahl verschiedene Zwischenpositionen einnehmen. Dies ist in Fig. 8 angedeutet.

In Fig. 10 ist dargestellt, wie mehrere der beschriebenen Dosiergeräte hintereinander zum Einspeisen von Schüttgut in eine gemeinsame Förderleitung verwendet werden können.

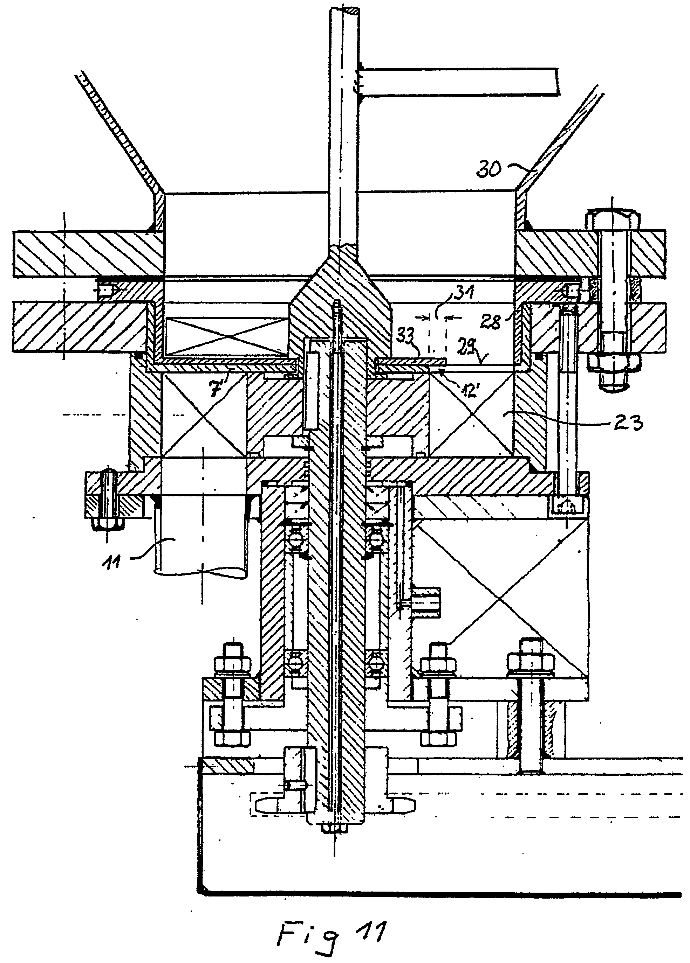

Die Ausbildung der Erfindung nach Fig. 11 sieht eine Verschließvorrichtung 28 vor, die als topfförmige Drehblende mit wenigstens einer Durchlaßöffnung 29 ausgebildet ist. Durch Drehung der zwischen zwei Flanschen eingesetzten Verschließvorrichtung 28 wird die Durchlaßöffnung 29 über die ringsegmentförmigen Öffnungen 8 der Abdeckplatte 7 gebracht. Um den Silo 30 von der Dosiervorrichtung abzutrennen, wird die Verschließvorrichtung 28, insbesondere die kreisscheibenförmige Bodenplatte 33 mit Öffnung 29 so lange verdreht, bis die Durchlaßöffnungen 8 verschlossen sind.

Erfindungsgemäß weist diese Ausführungsform ebenfalls einen Überhang 31 auf, der gleich ausgebildet ist, wie zu Fig. 5 und 6 beschrieben. In der Fig 5 ist deshalb zur Veranschaulichung die Trennkante 32 eingezeichnet, die die untere Abdeckplatte 7' und die obere blendenförmige Verschließvorrichtung 28, 33 trennt. Die Kreisscheibe 33 der Verschließvorrichtung 28 weist wenigstens eine Durchgangsöffnung 29 auf. Es können jedoch auch mehrere Öffnungen vorgesehen sein, die zur Grobeinstellung des Dosiervorganges dienen. Maßgeblich ist jedoch die Möglichkeit des Verschließens der Durchgangsöffnung zwischen Silo 30 und Zellenradkammer 23.

**Patentansprüche**

1. Vorrichtung zum Dosieren von Schüttgut, bestehend aus einem, um eine senkrechte Achse in einem zylindrischen Gehäuse drehenden Rotor mit radialen Schaufeln (2), der an seiner Oberseite mit einer, mit einem kreisringsegmentförmigen Durchbruch (8) für den Schüttgutzulauf versehenen Abdeckplatte (7) abgedeckt ist, wobei der Durchbruch der Abdeckplatte einen äußeren Durchmesser (D) aufweist, der nahezu dem Rotordurchmesser entspricht und einen inneren Durchmesser (d) aufweist, der größer ist als die Rotornabe (1) und wobei dem Rotor wenigstens eine Austragsöffnung (11) für den Schüttgutablauf nachgeschaltet ist, dadurch gekennzeichnet, daß im Bereich des Austritts der Rotorschaufel (2) aus dem Kreisringsegment (8) zwischen der der Schaufelbewegung entgegenstehenden Begrenzungskante (15) dieses Kreisringsegments und den Schaufeln (2) ein spitzer, nach der Rotornabe hin offener Winkel (α) eingeschlossen ist, daß in diesem Bereich des Kreissegments (8) die Unterseite der Abdeckplatte (7) eine unterschnittene Aussparung (12) zur Bildung eines Zwischenraumes zwischen der Unterseite der Abdeckplatte (7) und der Oberkante der Rotorschaufel (2) aufweist und daß die Flächennormale (22) der Austragsöffnung (11) für den Schüttgutablauf im zylindrischen Gehäuse (3) parallel zur senkrechten Achse verläuft oder mit dieser einen Winkel (γ) von bis zu 90° einnimmt.

2. Vorrichtung nach Anspruch 1, dadurch gekennzeichnet, daß eine der Schaufelbewegung entgegengerichtete Kante (19) der unterschnittenen Aussparung (12), in Drehrichtung des Rotors gesehen, hinter der Begrenzungskante (15) liegt und daß die Kante (19) mit den sich vorbeibewegenden Schaufeln (2) einen spitzen, zur Rotornabe hin geschlossenen Winkel (β) einschließt.

3. Vorrichtung nach Anspruch 1, dadurch gekennzeichnet, daß der Abstand zwischen der Unterseite der Abdeckplatte (7) und der Oberkante der Rotorschaufeln (2) im Bereich der unterschnittenen Aussparung (12) derart bemessen ist, daß er mindestens dem Durchmesser des größten Feststoffpartikels des Schüttgutes entspricht und insbesondere 3 bis 10 mm beträgt.

4. Vorrichtung nach Anspruch 3, dadurch gekennzeichnet, daß der Abstand zwischen der Unterseite der Abdeckplatte (7) und der Oberkante der Rotorschaufeln (2) außerhalb des Bereichs der Aussparung (12) etwa 0,05 bis 0,5 mm beträgt.

5. Vorrichtung nach Anspruch 1 oder 2, dadurch gekennzeichnet, daß der Winkel (α) und/oder der Winkel (β) größer als 5° ist und vorzugsweise α ≈ β ≈ 30 bis 40°, insbesondere 35° beträgt.

6. Vorrichtung nach Anspruch 1, dadurch gekennzeichnet, daß die Austragsöffnung (11) aus dem Gehäuse (3) für den Schüttgutablauf über einen Verbindungsschacht (21) mit einer pneumatischen Förderleitung (20) verbunden ist.

7. Vorrichtung nach Anspruch 1 oder 6, dadurch gekennzeichnet, daß eine gemeinsame Pneumatik-Förderleitung (20) für mehrere hintereinander angeordnete Dosiervorrichtungen vorgesehen und daß bei einer pneumatischen Druckförderung - in Strömungsrichtung (27) gesehen - vor der Austragsöffnung (11) eine Druckausgleichsleitung (26) zwischen Förderleitung (20) und Zellenradkammer (23) angeordnet ist.

8. Vorrichtung nach einem oder mehreren der vorhergehenden Ansprüche 1 bis 7, dadurch gekennzeichnet, daß oberhalb der Abdeckplatte (7) eine kreisscheibenförmige Blende (33) als Verschließeinrichtung (28) vorgesehen ist, die wenigstens eine Durchlaßöffnung (29) aufweist und daß die unterschnittene Aussparung (12') durch die über die Abdeckplatte (7) übergreifende Kante (31) der Kreisscheibenblende (33) gebildet ist.

**Claims**

1. An apparatus for the measured dispensing of bulk material, consisting of a rotor having radial blades (2) and rotating in a cylindrical housing about a vertical axis and which is covered at the top by a cover plate (7) provided with a circularly segmented aperture (8) for the feeding of bulk material, the aperture in the cover plate having an outside diameter (D) which virtually corresponds to the rotor diameter and an inside diameter (d) which is greater than the rotor hub (1), the rotor being followed on the downstream side by at least one delivery orifice (11) for the discharge of bulk material, characterised in that in the region of the outlet from the segment (8) of the circle between the boundary edge (15) of this segment which faces the opposite way to the blade movement, and the blades (2), an acute angle (α) is formed which is open in the direction of the rotor hub and in that in this region of the segment (8) the underside of the cover plate (7) has an undercut recess (12) to form an intermediate space between the underside of the cover plate (7) and the top edge of the rotor blade (2) and in that the normal (22) at a point on the surface of the delivery orifice (11) for the discharge of bulk material in the cylindrical housing (3) extends parallel with the vertical axis or encloses therewith an angle (γ) of up to 90°.

2. An apparatus according to Claim 1, characterised in that an edge (19) of the undercut recess (12) which faces the opposite direction to that of blade movement, when viewed in the direction of rotation of the rotor, is behind the boundary edge (15), the edge (19), together with the passing blades (2), enclosing an acute angle (β) which is closed towards the rotor hub.

3. An apparatus according to Claim 1, characterised in that the distance between the underside of the cover plate (7) and the top edge of the rotor blades (2) in the region of the undercut recess (12) is so dimensioned that it corresponds at least to the diameter of the largest solids particle in the bulk material and in particular amounts to 3 to 10 mm.

4. An apparatus according to Claim 3, characterised in that the distance between the underside of the cover plate (7) and the top edge of the rotor blades (2) outside the region of the recess (12) amounts to about 0.05 to 0.5 mm.

5. An apparatus according to Claim 1 or 2, characterised in that the angle ($\alpha$) and/or the angle ($\beta$) is greater than 5° and is preferably $\alpha \approx \beta \approx 30$ to 40° and in particular 35°.

6. An apparatus according to Claim 1, characterised in that the delivery orifice (11) from the housing (3) for the discharge of bulk material is connected by a shaft (21) to a pneumatic conveyor line (20).

7. An apparatus according to Claim 1 or 6, characterised in that a common pneumatic conveyor line (20) is provided for a plurality of serially disposed dispensing apparatuses and in the case of a pneumatic pressure delivery means – viewed in the direction of flow (27) – a pressure compensating line (26) is disposed in front of the delivery orifice (11) between the conveyor line (20) and the bucket wheel chamber (23).

8. An apparatus according to one or more of the preceding Claims 1 to 7, characterised in that above the cover plate (7) there is a circular disc-like diaphragm (33) which serves as a closure means (28) which incorporates at least one through-flow aperture (29) and in that the undercut recess (12') is formed by that edge (31) of the circular disc-like diaphragm (33) which engages over the cover plate (7).

## Revendications

1. Dispositif pour le dosage d'une matière en vrac, comportant un rotor tournant dans un carter cylindrique autour d'un axe vertical et pourvu d'aubes radiales (2), ledit rotor étant recouvert à sa partie supérieure par une plaque de recouvrement (7) pourvue d'une découpe (8) en forme de segment de cercle pour l'amenée de matière en vrac, ladite découpe de la plaque de recouvrement présentant un diamètre extérieur (D) qui correspond approximativement au diamètre du rotor et un diamètre intérieur (d) qui est plus grand que le moyeu (1) dudit rotor, au moins un orifice de sortie (11) pour l'écoulement de matière en vrac étant prévue en aval du rotor, caractérisé en ce que, au voisinage de la sortie des aubes de rotor (2) hors du segment en forme de cercle (8), entre l'arête limite (15) de ce segment de cercle faisant face au mouvement des aubes et lesdites aubes (2) est déterminé un angle aigü ($\alpha$) ouvert en direction du moyeu du rotor, en ce que au voisinage du segment de cercle (8) la face inférieure de la plaque de recouvrement (7) présente un évidement (12) pour former un espace intermédiaire entre la face inférieure de la plaque de recouvrement (7) et l'arête supérieure des aubes de rotor (2) et en ce que la normale (22) de l'orifice de sortie (11) pour l'écoulement de matière en vrac dans le carter cylindrique (3) est parallèle à l'axe vertical ou détermine avec celui-ci un angle ($\gamma$) jusqu'à 90°.

2. Dispositif selon la revendication 1, caractérisé en ce que l'arête (19) de l'évidement (12) faisant face au mouvement des aubes, se trouve derrière l'arête limite (15), par rapport au sens de rotation du rotor, et en ce que l'arête (19) forme avec les aubes (12) qui défilent devant elle un angle aigü ($\beta$) fermé en direction du moyeu du rotor.

3. Dispositif selon la revendication 1, caractérisé en ce que la distance entre la face inférieure de la plaque de recouvrement (7) et l'arête supérieure des aubes de rotor (2), au voisinage de l'évidement (12), est telle qu'elle correspond au moins au diamètre des plus grosses particules solides de la matière en vrac et en particulier à une dimension comprise entre 3 et 10 millimètres.

4. Dispositif selon la revendication 3, caractérisé en ce que la distance entre la face inférieure de la plaque de recouvrement (7) et l'arête supérieure des aubes de rotor (2), à l'extérieur du voisinage de l'évidement (12) a une dimension comprise entre environ 0,05 et 0,5 millimètre.

5. Dispositif selon l'une quelconque des revendications 1 ou 2, caractérisé en ce que l'angle ($\alpha$) et/ou l'angle ($\beta$), est supérieur à 5° et de préférence, $\alpha$ est égal à $\beta$ et est compris entre 30 et 40°, en particulier est égal à 35°.

6. Dispositif selon la revendication 1, caractérisé en ce que l'ouverture de sortie (11) hors du carter (3) pour le courant de matière en vrac est reliée à une conduite d'alimentation pneumatique (20) par l'intermédiaire d'un puits de liaison (21).

7. Dispositif selon l'une des revendications 1 ou 6, caractérisé en ce qu'une conduite d'alimentation pneumatique commune (20) est prévue pour une pluralité de dispositifs de dosage agencés les uns derrière les autres et en ce que lors d'une alimentation pneumatique sous pression une conduite d'équilibre de pression (26) est comprise entre la conduite d'alimentation (20) et des chambres radiales de roue cellulaire (20), en amont de l'ouverture de sortie (11), par rapport à la direction d'écoulement (27).

8. Dispositif selon l'une quelconque des revendications 1 à 7, caractérisé en ce que, au-dessus de la plaque de recouvrement (7), est prévu un écran en forme de disque (33) formant dispositif d'obturation (28), qui présente au moins une ouverture de passage (29) et en ce que la découpe (12') est formée dans le bord (31) de l'écran (33) en surplomb sur la plaque de recouvrement (7).

EP 0 212 256 B1

Fig. 1

Fig. 2

Fig. 3

Fig. 4

15 16 17 12 18 19 7

28,33

7'

32

2 2 2

*Fig. 5*

15 B 7

19 32

33

7'

1 2 2

*Fig. 6*

*Fig. 7*

*Fig. 7a*

Fig. 8

Fig. 9

Fig. 10

Fig 11